(19) Europäisches Patentamt
European Patent Office
Office européen des brevets

(11) Publication number: **0 643 125 A1**

(12) **EUROPEAN PATENT APPLICATION published in accordance with Art. 158(3) EPC**

(21) Application number: **93906816.9**

(22) Date of filing: **24.03.93**

(86) International application number: **PCT/JP93/00352**

(87) International publication number: **WO 94/21758 (29.09.94 94/22)**

(51) Int. Cl.[6]: **C10M 107/38**, //G11B5/71, C10N40:18

(43) Date of publication of application: **15.03.95 Bulletin 95/11**

(84) Designated Contracting States: **DE FR GB**

(71) Applicant: **SONY CORPORATION
7-35 Kitashinagawa 6-chome
Shinagawa-ku
Tokyo 141 (JP)**

(72) Inventor: **KONDO, Hirofumi, Sony Corporation
7-35, Kitashinagawa 6-chome,
Shinagawa-ku
Tokyo 141 (JP)**
Inventor: **SEKI, Atsushi, Sony Corporation
7-35, Kitashinagawa 6-chome,
Shinagawa-ku
Tokyo 141 (JP)**
Inventor: **KAMEI, Takahiro, Sony Corporation
7-35, Kitashinagawa 6-chome,
Shinagawa-ku
Tokyo 141 (JP)**
Inventor: **TANAKA, Koichi, Sony Corporation
7-35, Kitashinagawa 6-chome,
Shinagawa-ku
Tokyo 141 (JP)**

(74) Representative: **TER MEER - MÜLLER - STEINMEISTER & PARTNER
Mauerkircherstrasse 45
D-81679 München (DE)**

(54) **LUBRICANT AND MAGNETIC RECORDING MEDIUM CONTAINING THE SAME.**

(57) A lubricant comprising an ester compound prepared from a hydroxyl-terminated perfluorinated polyether and a long-chain carboxylic acid or a fluoroalkylated carboxylic acid, or from a carboxyl-terminated perfluorinated polyether and a long-chain alcohol or a fluoroalkylated alcohol; and a magnetic recording medium containing the same. The lubricant has a good lubricity not only even under severe conditions including both a low temperature and humidity and high temperature and humidity but also for a long period of time. Accordingly, when used as a lubricant for a magnetic recording medium, it can lower the coefficient of friction and remarkably improve the travelling characteristics, wear resistance and durability.

EP 0 643 125 A1

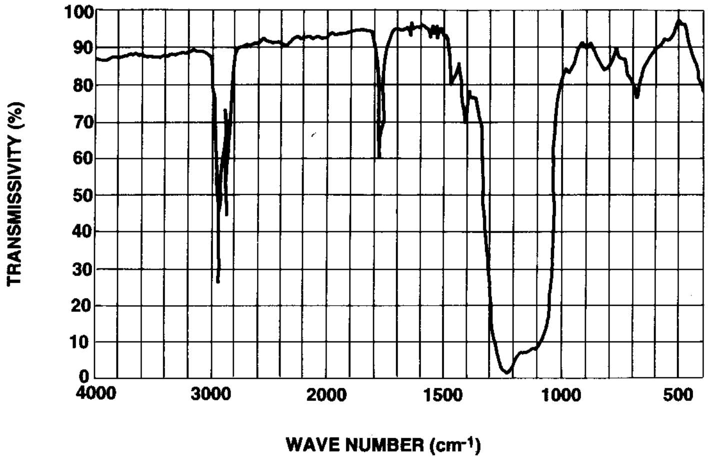
TRANSMISSIVITY (%)
100
90
80
70
60
50
40
30
20
10
0
4000
3000
2000
1500
1000
500
WAVE NUMBER (cm-1)

FIG.1

## Technical Field

This invention relates to a lubricant in a magnetic recording medium such as a magnetic tape or a magnetic disk, etc., and a magnetic recording medium using the same.

## Background Art

In so called metal magnetic thin film type magnetic recording media such that, e.g., a ferromagnetic metal material is deposited on the surface of a non-magnetic support by the technique such as vapor deposition, etc. so that a magnetic layer is formed, since the smoothness of the magnetic layer surface is extremely satisfactory, the substantial contact area with respect to a slide member such as a magnetic head or a guide roller, etc. is large. Accordingly, the friction factor becomes large, so there are many problems that adhesion (so called sticking) is apt to occur, resulting in lackness in running characteristic or durability.

In order to improve these problems, it have been studied to use various lubricants. Hitherto, an attempt has been made to top-coat higher fatty acid and its ester, etc. on the magnetic layer of the magnetic recording medium to thereby hold down the friction factor to a lower value.

Meanwhile, for lubricants used in the magnetic recording medium, very severe characteristics are required from a viewpoint of the property. It is the present circumstances that lubricants conventionally used are difficult to cope with such requirement.

Namely, for lubricants used in the magnetic recording medium, it is required that

(1) the low temperature characteristic is excellent so that a predetermined lubricating effect is ensured in use at cold districts,

(2) since the spacing between the lubricant and the magnetic head becomes problem, the lubricant can be coated in an extremely thin manner, and a sufficient lubricating characteristic is exhibited even in that case,

(3) the lubricant tolerate long time, or use for a long time so that the lubricating effect is maintained, and the like.

However, higher fatty acid or its ester, etc. conventionally used has a tendency such that it might be frozen and solidified under low temperature condition like less than 0 °C so that the function as the lubricant is damaged or there results insufficient durability of long time. Further, there has been proposed a method in which perfluoropolyether is used as a lubricant. However, since perfluoropolyether cannot be dissolved only in freon solvent, it cannot be said that such material is necessarily preferable material from a viewpoint of the environmental problem.

As stated above, in the field of the magnetic recording medium, there remains dissatisfaction in the practical use characteristic such as running characteristic or durability, etc., resulting from insufficient ability of a lubricated used.

## Disclosure of the Invention

With the above in view, objects of this invention are to provide a lubricant which exhibits excellent lubricating characteristic (lubricity) under various use conditions, and to provide a magnetic recording medium which is excellent in the running characteristic, abrasion resistance, durability, and the like.

As the result of the fact that the inventors of this application energetically conducted studies with a view to attaining the above-described objects, by using, as a lubricant, ester compound of perfluoropolyether including hydroxyl group at the end and long chain carboxylic acid or carboxylic acid including alkyl fluoride group, or ester compound of perfluoropolyether including carboxyl group at the end and long chain alcohol or alcohol including alkyl fluoride group, they have found that an excellent lubricating effect can be obtained, and have satisfactorily completed this invention.

Namely, lubricants according to the first to fourth inventions of this application are characterized in that each is comprised of ester compound of perfluoropolyether including hydroxyl group at the end and long chain carboxylic acid or carboxylic acid including alkyl fluoride group, or ester compound of perfluoropolyether including carboxylic group at the end and long chain alcohol or alcohol including alkyl fluoride group.

Magnetic recording media according to the fifth to eighth inventions of this application are characterized in that, in a magnetic recording medium including at least a magnetic layer on a non-magnetic support, the magnetic recording medium includes, at the surface of the magnetic layer, the lubricant in any one of the above-described first to fourth inventions at the surface of the magnetic layer.

The lubricant comprised of ester compound of perfluoropolyether including hydroxyl group at the end and long chain carboxylic acid or carboxylic acid including alkyl fluoride group, or ester compound of perfluoropolyether including carboxylic group at the end and long chain alcohol or alcohol including alkyl fluoride group has an excellent lubricating characteristic (lubricity), and exhibits such effect even under severe condition such as low temperature and low humidity, or high temperature and high humidity. In addition, the lubricating characteristic (lubricity) is not lowered for a long time.

Accordingly, if these ester compounds are used as the lubricant of the magnetic recording medium, the friction factor can be reduced by excellent lubricating effect, and running characteristic, abrasion resistance and durability, etc. can be improved to much degree. In addition, since the above-mentioned ester compounds can be dissolved even in an organic solvent except for freon (e.g., hydrocarbon such as n-hexane), a quantity of use of freon solvent can be reduced or such solvent can be disused. This is favorable in view of the environmental problem, etc.

Brief Description of the Drawings

FIG. 1 is a characteristic diagram showing an infrared absorption spectrum of an example of a lubricant to which this invention is applied.

FIG. 2 is a characteristic diagram showing an infrared absorption spectrum of another example of a lubricant to which this invention is applied.

Best Mode for Carrying Out the Invention

In the first invention of this application, ester compound of perfluoropolyether including hydroxyl group at the end and long chain carboxylic acid is obtained, e.g., by allowing perfluoropolyether including hydroxyl group at the end and carboxylic acid chloride to react with each other by using basic as catalyst.

As perfluoropolyether including hydroxyl group at the end used in synthesizing this ester compound, perfluoropolyether including hydroxyl group at one end (monofunctional perfluoropolyether) or perfluoropolyether including hydroxyl groups at the both ends (multifunctional perfluoropolyether) may be used, and such material may be used irrespective of the substitutional position.

Actual examples are given below. As the monofunctional perfluoropolyether, materials indicated by the following formulas (1)~(2) or the like are enumerated. As the multifunctional perfluoropolyether, material indicated by the following formula (3), or the like are enumerated. However, material which can be used are not those materials.

(a) Monofunctional perfluoropolyether

$$F(CF_2CF_2CF_2O)_nCF_2CF_2CH_2OH \quad \cdots \quad (1)$$

$$CF_3(O\overset{CF_3}{C}FCF_2)_m(OCF_2)_1CH_2OH \quad \cdots \quad (2)$$

(b) Multifunctional perfluoropolyether

$$HOCH_2CF_2(OC_2F_4)_p(OCF_2)_qOCF_2CH_2OCH \qquad (3)$$

It is to be noted that p, q, ℓ, m and n in the above-mentioned formulas (1)~(3) indicate integers of 1 or more, respectively. Further, although the molecular weight of perfluoropolyether including hydroxyl group at the end is particularly restricted, it is preferable that such molecular weight is about 600~5000. If the molecular weight is too large, the effect as an adsorption group of the end group is weakened and a quantity of use of freon is increased to such a degree that the perfluoropolyether chain becomes large. In contrast, if the molecular weight is too small, the lubricating effect by the perfluoropolyether chain is lost.

It is to be noted that, in perfluoropolyether including hydroxyl group at the end, it is sufficient that the perfluoropolyether chain is partially hydrogenized (hydrogenated). Namely, it is sufficient that hydrogen atom is substituted for a part (less than 50 %) of fluorine atom of the perfluoropolyether chain. In this case, it is sufficient to use partially hydrogenized perfluoropolyether as perfluoropolyether. Thus, a quantity of use of the freon solvent can be reduced.

On the other hand, as the carboxylic acid chloride basic, any material commercially available or compounds thereof may be used.

Ester compound of perfluoropolyether including hydroxyl group at the end and long chain carboxylic acid synthesized in this manner is expressed by the general expression indicated by the following formula (4) or (5).

$R_f - CH_2OCOR$ (4)

$RCOOCH_2 - R_f - CH_2OCOR$ (5)

It is to be noted that $R_f$ in the above-mentioned formulas (4)~(5) represents perfluoropolyether chain. In addition, R represents alkyl group.

In this case, the structure, or the like of the long chain carboxylic acid is arbitrary, and any carboxylic acid may be used irrespective of the branch structure, the isometric structure, the alicyclic structure and the unsaturated bond. Although its molecular quantity is arbitrary, since the long chain carboxylic acid becomes more difficult to be dissolved into organic solvent except for freon according as the molecular weight becomes smaller, it is preferable that the number of carbons of at least alkyl group is 10 or more.

Further, in the second invention of this application, ester compound of perfluoropolyether including carboxyl group at the end and long chain alcohol is obtained by allowing, e.g., perfluoropolyether including carboxyl group at the end and long chain alcohol to react with each other in toluene anhydride by using, e.g., p-toluene sulfonic acid or concentrated nitric acid as catalyst.

As perfluoropolyether including carboxyl group at the end used in synthesizing ester compound, either monofunctional perfluoropolyether or multifunctional perfluoropolyether may be used.

An actual example is given below. As the monofunctional perfluoropolyether, materials expressed by the following formulas (6)~(7), or the like are enumerated. As the multifunctional perfluoropolyether, material expressed by the following formula (8), or the like is enumerated. However, materials which can be used are not limited to these materials.

(a) Monofunctional perfluoropolyether

$$F(CF_2CF_2CF_2O)_nCF_2CF_2COOH \quad \cdots \quad (6)$$

$$CF_3(OC\overset{CF_3}{F}CF_2)_m(OCF_2)_\ell COOH \quad \cdots \quad (7)$$

(b) Multifunctional perfluoropolyether

$HOCOCF_2(OC_2F_4)_p(OCF_2)_qOCF_2COOH$ (8)

It is to be noted that p, q, ℓ, m and n in the above-mentioned formulas (6)~(8) represent integers of 1 or more, respectively. Although the molecular weight of perfluoropolyether including carboxyl group at the end is not particularly restricted, it is preferable that such molecular weight is about 600~5000 for a practical use. If the molecular weight is too large, the effect as the adsorption group of the end group is weakened, and a quantity of use of freon is increased to such a degree that perfluoropolyether chain becomes larger. In contrast, if the molecular weight is too small, the lubricating effect by perfluoropolyether chain is lost.

It is to be noted that, in perfluoropolyether including carboxyl group at the end, it is sufficient that perfluoropolyether chain is partially hydrogenized (hydrogenated) similarly to the case of the above-described first invention of this application.

On the other hand, as the long chain alcohol, any material commercially available or compound thereof may be used. Further, since such long chain alcohol becomes more difficult to be dissolved into organic solvent except for freon according as the molecular weight becomes smaller, it is preferable that the number of carbons of at least one alkyl group thereof is 6 or more.

Ester compound of perfluoropolyether including carboxylic group at the end and long chain alcohol synthesized in this way is expressed by the general expression indicated by the following formula (9) or (10):

$R_f$ - COOR (9)

ROOC - $R_f$ - COOR (10)

It is to be noted that $R_f$ in the above-mentioned formula (9)~(10) indicates perfluoropolyether chain. In addition, R indicates alkyl group. The structure of this alkyl group R is an arbitrary, and any material belonging thereto can be desirably selected irrespective of the branch structure, the isometric structure, the alicyclic structure or the unsaturated bond. In addition, while the molecular weight is arbitrary, it is preferable that when solubility with respect to organic solvent except for freon, the number of carbons is 6 or more.

In the third invention of this application, ester compound of perfluoropolyether including hydroxyl group at the end and carboxylic acid including alkyl fluoride group is obtained by mixing perfluoropolyether ($R_f$-$CH_2OH$ or $HOCH_2$-$R_f$-$CH_2OH$) including hydroxyl group at the end and carboxylic acid including alkyl fluoride group and corresponding acid chloride (RCOCIℓ) derived from carboxylic acid (RCOOH) including alkyl fluoride group having a molecular weight equal to that of hydroxyl group included in the perfluoropolyether.

Synthetic reaction of this ester compound is expressed by the following formula (11) or (12):

$R_f$ -$CH_2OH$ + RCOCℓ → $R_f$ -$CH_2OCOR$ + HCℓ (11)

$HOCH_2$ -$R_f$ -$CH_2OH$ + 2RCOCℓ → $RCOOCH_2$-$R_f$ -$CH_2OCOR$ + 2HCℓ (12)

As perfluoropolyether including hydroxyl group at the end used in synthesizing this ester compound, either monofunctional perfluoropolyether or multifunctional perfluoropolyether may be used.

An actual example is given below. As the monofunctional perfluoropolyether, materials expressed by the following formulas (13)~(15) are enumerated. As the multifunctional perfluoropolyether, materials expressed by the following formulas (16)~(18) are enumerated, but material which can be used are not limited to these materials:

(a) Monofunctional perfluoropolyether

$$F(CF_2\underset{CF_3}{\overset{|}{C}}FO)_iCF_2CH_2OH \quad \cdots (13)$$

$F(CF_2O)_j(CF_2O)_k(CF_2O)_\ell CF_2CH_2OH$ (14)

$F(CF_2CF_2CF_2O)_mCF_2CF_2CH_2OH$ (15)

(b) Multifunctional perfluoropolyether

$$HOCH_2(CF_2\underset{CF_3}{\overset{|}{C}}FO)_iCF_2CH_2OH \quad \cdots (16)$$

$HOCH_2(CF_2O)_j(CF_2CF_2O)_k(CF_2O)_\ell CF_2CH_2OH$ (17)

$HOCH_2(CF_2CF_2CF_2O)_mCF_2CF_2CH_2OH$ (18)

It is to be noted that i, j, k, ℓ and m in the above-mentioned formulas (13)~(18) represent integers, respectively. Although the molecular weight of perfluoropolyether including hydroxyl group at the end is not particularly restricted, it is preferable that such molecular weight is about 600~5000 from a practical point of view. If the molecular weight is too large, the effect as the adsorption group of the end is weakened, and a

quantity of use of freon is increased to such a degree that perfluoropolyether chain becomes larger. In contrast, if the molecular weight is too small, the lubricating effect by perfluoropolyether chain is lost.

It is to be noted, in the perfluoropolyether including hydroxyl group at the end, perfluoropolyether chain may be partially hydrogenized (hydrogenated) similarly to the case of the above-described first invention of this application.

On the other hand, as the carboxylic acid including the alkyl fluoride group, a material having a general expression indicated by the following formula (19) is used.

$RCOOH$ (19)

It is to be noted that R in the above-mentioned formula (19) represents alkyl fluoride group where the number of carbons is 7~30. Further, in carboxylic acid including alkyl fluoride group, the structure thereof, etc. is arbitrary, and any material belonging thereto can be selected irrespective of presence or absence of branch structure, cyclic group, aromatic ring, or unsaturated bond.

Ester compound of perfluoropolyether including carboxyl group at the end and carboxylic acid including alkyl fluoride group synthesized in this way is expressed by the general expression indicated by the following formula (20) or (21):

$R_f\text{-}CH_2OCOR$ (20)

$RCOOCH_2\text{-}R_f\text{-}CH_2OCOR$ (21)

It is to be noted that $R_f$ in the above-mentioned formulas (20)~(21) represents perfluoropolyether chain. In addition, R represents alkyl fluoride group.

Further, in the fourth invention of this application, ester compound of perfluoropolyether including carboxyl group at the end and alcohol including alkyl fluoride group is obtained by mixing, e.g., corresponding acid chloride ($R_f$-COCℓ or CℓOC-$R_f$-COCℓ) derived from perfluoropolyether ($R_f$-COOH or HOOC-$R_f$-COOH) including carboxyl group at the end and alcohol (ROH) including alkyl fluoride group having a molecular weight equal to that of carboxyl group included in the perfluoropolyether.

Synthetic reaction of this ester compound is expressed by the following formula (22) or (23):

$R_f\text{-}COC\ell + ROH \rightarrow R_f\text{-}COOR + HC\ell$ (22)

$C\ell OC\text{-}R_f\text{-}COC_\ell + 2ROH \rightarrow ROOC\text{-}R_f\text{-}COOR + 2HC\ell$ (23)

As perfluoropolyether including hydroxyl group at the end used in synthesizing this ester compound, either monofunctional perfluoropolyether or multifunctional perfluoropolyether may be used.

An actual example is given below. As the monofunctional perfluoropolyether, materials expressed by the following formulas (24)~(26) are enumerated. As the multifunctional perfluoropolyether, materials expressed by the following formulas (27)~(29) are enumerated. However, material which can be used are not limited to these materials:

(a) Monofunctional perfluoropolyether

$$F(CF_2\overset{\displaystyle CF_3}{\overset{|}{C}}FO)_iCF_2COOH \quad \cdots \quad (24)$$

$F(CF_2O)_j(CF_2CF_2O)_k(CF_2O)_\ell CF_2COOH$ (25)

$F(CF_2CF_2CF_2O)_mCF_2CF_2COOH$ (26)

(b) Multifunctional perfluoropolyether

$$HOCO(CF_2\overset{CF_3}{C}FO)_iCF_2COOH \quad \cdots \quad (27)$$

$HOCO(CF_2O)_j(CF_2CF_2O)_k(CF_2O)_\ell CF_2COOH$ (28)

$HOCO(CF_2CF_2CF_2O)_mCF_2CF_2COOH$ (29)

It is to be noted that i, j, k, ℓ and m in the above-mentioned formulas (24)~(29) represent integers, respectively. Although the molecular weight of perfluoropolyether including carboxyl group at the end is not particularly restricted, it is preferable that such molecular weight is about 600~5000 in a practical sense. If the molecular weight is too large, the effect as the adsorption group of the end group is weakened, and a quantity of use of freon is increased to such a degree that perfluoropolyether chain becomes larger. In contrast, if the molecular weight is too small, the lubricating effect by perfluoropolyether chain is lost.

It is to be noted, in perfluoropolyether including carbo group at the end, perfluoropolyether chain may be partially hydrogenized (hydrogenated) similarly to the case of the above-described first invention of this application.

On the other hand, as alcohol including the alkyl fluoride group, a material having a general expression indicated by the following formula (30) is used:

ROH (30)

It is to be noted that R in the above-mentioned formula (30) represents alkyl fluoride group where the number of carbons is 7~30. Further, in alcohol including alkyl fluoride group, the structure thereof, etc. is arbitrary, and any material belonging thereto can be selected irrespective of presence or absence of branch structure, cyclic group, aromatic ring, or unsaturated bond.

Ester compound of perfluoropolyether including carboxyl group at the end and alcohol including alkyl fluoride group synthesized in this way is expressed by the general expression indicated by the following formula (31) or (32):

$R_f$ $-CH_2OCOR$ (31)

$RCOOCH_2$ $-R_f$ $-CH_2OCOR$ (32)

It is to be noted that $R_f$ in the above-mentioned formulas (31)~(32) represents perfluoropolyether chain. In addition, R represents alkyl fluoride group.

Magnetic recording media according to the fifth to eighth inventions of this application each include ester compound according to any one of the above-described fifth to eighth inventions as a lubricant at the surface of a magnetic layer.

Although magnetic recording media to which this invention is applied are not particularly limited, this invention is effective when applied to a magnetic recording medium of the so-called metal magnetic thin film type such that a metal magnetic thin film is deposited and formed on a non-magnetic support surface as a magnetic layer by the technique such as vapor deposition process or sputtering process. It is a matter of course that, in the magnetic recording medium to which this invention is applied, a film configuration, etc. is arbitrary, and there may be employed, e.g., a configuration such that an underlying layer is provided between the non-magnetic support and the magnetic layer.

In the magnetic recording medium of the metal magnetic thin film type, the kind of the non-magnetic support or the metal magnetic thin film, etc. is not limited in any sense. Any thin film conventionally known may be used.

An example is given below. As the non-magnetic support, a higher molecular support formed by plastic material represented by polyester, polyolefin, cellulose derivative, vinyl resin, polyimide, polyamide, polycarbonate, or the like; a metal substrate comprised of aluminum alloy or titanium alloy, etc.; a ceramic substrate comprised of aluminum glass, etc., glass substrate, and the like may be used. In the case where a substrate having rigidity such as Aℓ alloy plate or glass plate, etc., an oxide film or a Ni-P film of alumite treatment, etc. may be formed on the substrate surface, thus to harden the surface.

Further, the form of the non-magnetic support is not limited in any sense. Any form such as a tape form, a sheet form or a drum form, etc. may be adopted. In addition, fine uneven portions may be formed on the non-magnetic support in order to control the surface property.

The metal magnetic thin film is formed as a continuous film by the vacuum thin film formation technique such as plating, sputtering or vacuum deposition, etc. For example, in-plane magnetization recording metal magnetic film comprised of metal such as Fe, Co, or Ni, etc., or Co-Ni alloy, Co-Pt alloy, Co-Pt-Ni alloy, Fe-Co alloy, Fe-Ni- alloy, Fe-Co-Ni alloy, Fe-Co-B alloy, Fe-Ni-B alloy, or Fe-Co-Ni-B alloy, etc., or Co-Cr alloy thin film may be used.

Particularly, in the case of the in-plane magnetization recording metal magnetic thin film, an underlying layer of a low melting point non-magnetic material such as Bi, Sb, Pb, Sn, Ga, In, Ge, Si or Ti, etc. may be formed in advance on the non-magnetic support to apply vacuum deposition or sputtering to the metal magnetic material from a vertical position to allow the low melting point non-magnetic material to be diffused into the metal magnetic thin film to eliminate orientation to ensure in-plane isotropy, and to improve coercive force.

In the case where a substrate having rigidity (hard disk) is used as the metal constituting a non-magnetic support as described above, hard protective film, e.g., a carbon film, a diamond-shaped or amorphous carbon film, chromium oxide film, or $SiO_2$ film, etc. may be formed on the surface of the metal magnetic thin film.

In such magnetic recording medium, as the method of including a lubricant of any one of the above-described first to fourth inventions, there is enumerated a method of top-coating a lubricant layer on the surface of the magnetic layer comprised of the metal magnetic thin film, etc., or the surface of the protective film. In this case, a coating quantity of a lubricant used is preferably 0.5~100 mg/$m^2$, and is more preferable 1~20 mg/$m^2$.

Moreover, ester compound used as a lubricant in this invention may be used by itself as the lubricant of the magnetic recording medium, but may be used in combination with any conventionally known lubricant.

Further, in order to cope with more severe condition and exhibit the lubricating effect, an extreme pressure agent may be used in combination at a mixture ratio of a weight ratio of about 30:70~70:30.

This extreme pressure agent reacts with a metal surface by friction heat followed when a metal contact partially occurs in the boundary lubricant area to form a reaction product film to thereby carry out friction/abrasion preventing action. For example, phosphoric extreme pressure agent, sulfuric extreme pressure agent, halogen extreme pressure agent, organic metal extreme pressure agent, or composite extreme pressure agent, etc. may be used.

Further, in the magnetic recording medium of this invention, rustproof agent may be used in combination as occasion demands in addition to the above-described lubricant or extreme pressure agent.

As the rustproof agent, any rustproof agent for a magnetic recording medium of this kind ordinarily used as the rustproof agent may be used. For example, there are, e.g., phenol, naphthol, quinone, heterocyclic compound including nitrogen atom, heterocyclic compound including oxygen atom, or heterocyclic compound including sulfur atom.

Meanwhile, in the above-described magnetic recording medium of the metal magnetic thin film type, a back coat layer or a undercoat layer, etc. may be formed according to need in addition to the metal magnetic thin film which serves as a magnetic layer.

For example, the back coat layer is obtained by adding a carbon fine powder for rendering conductivity or an inorganic pigment for controlling the surface roughness, etc. to resin binder similar to a magnetic coating film used in the so-called coating type magnetic recording medium to coat and form it. In this invention, a lubricant comprised of the ester compound may be included by adding it into the back coat layer or top-coating it thereon.

Further, in this invention, a lubricant comprised of the ester compound may be added into the magnetic coating film, the metal magnetic thin film and back coat layer, etc., or may be top-coated thereon. Various combinations may be employed.

More practical embodiments of this invention will now be described, but it is needless to say that this invention is not limited to these embodiments.

- Experiment 1 -

In this experiment, ester compound of perfluoropolyether including hydroxyl group at the end and long chain carboxylic acid is used as a lubricant, and durability and running characteristic are studied under various use conditions in connection with the so-called metal magnetic thin film type magnetic tape in which the above-mentioned lubricant is coated on the surface of a magnetic layer.

Synthesis of ester compound

First, $HOCH_2CF_2(OC_2F_4)_p(OCF_2)_qOCF_2CH_2OH$ (p and q represent integers 1 or more, respectively) having a molecular weight of 2000 was used as perfluoropolyether including hydroxyl group at the end to dissolve triethyl amine having a molecular ratio twice greater than that of this perfluoropolyether into freon to further drop stearic acid chloride having a molecular ratio twice greater than that of this perfluoropolyether into the above-mentioned solution for 30 minutes.

After dropping is completed, agitating was carried out for one hour, and heat-reflux was subsequently carried out for 30 minutes. After cooling, rinsing was conducted by using distilled water and dilute hydrochloric acid in order recited to carry out rising until the rinse liquid becomes neutral by using dilute hydrochloric acid for a second time.

Subsequently, organic solvent is removed to purify compound obtained by using silica gel column chromatography.

Infrared absorption spectrum of the purified compound 1 was examined. This result is shown in Fig. 1.

As shown in Fig. 1, stretching vibrations of the C-H bond appear at 2920 $cm^{-1}$ and 2850 $cm^{-1}$. Stretching vibration of the carbonyl group appears at 1765 $cm^{-1}$. Further, stretching vibration of the C-F bond appears in a range from 1350 $cm^{-1}$ to 1000 $cm^{-1}$. On the other hand, absorption resulting from hydroxyl group in the vicinity of 3690 $cm^{-1}$ disappears. From this fact, the above-mentioned compound 1 can be identified with ester stearate of perfluoropolyether $C_{17}H_{35}COOCH_2CF_2(OC_2F_4)_p(OCF_2)_qOCF_2CH_2OCOC_{17}H_{35}$ (p and q represent integers 1 or more, respectively).

Similarly to the above-mentioned compound 1, various ester compounds (compounds 2~14) of perfluoropolyether including hydroxyl group at the both ends and long chain carboxylic acid were synthesized. It is to be noted that p, q, ℓ, m and n in Table 1 represent integers 1 or more, respectively.

Table 1

| | $RCOOCH_2-R_f-CH_2OCOR$ | |
|---|---|---|
| | PERFLUOROPOLYETHER CHAIN $R_f$ | ALKYL GROUP R |
| COMPOUND 1 | $CF_2(OC_2F_4)_p(OCF_2)_qOCF_2$ | $C_{18}H_{37}$ |
| COMPOUND 2 | $CF_2(OC_2F_4)_p(OCF_2)_qOCF_2$ | $C_{18}H_{37}$ |
| COMPOUND 3 | $CF_2(OC_2F_4)_p(OCF_2)_qOCF_2$ | $C_{18}H_{37}$ |
| COMPOUND 4 | $CF_2(OC_2F_4)_p(OCF_2)_qOCF_2$ | $C_{18}H_{37}$ |
| COMPOUND 5 | $F(CF_2CF_2CF_2O)_nCF_2CF_2$ | $C_{18}H_{37}$ |
| COMPOUND 6 | $F(CF_2CF_2CF_2O)_nCF_2CF_2$ | $C_{16}H_{33}$ |
| COMPOUND 7 | $F(CF_2CF_2CF_2O)_nCF_2CF_2$ | $C_{14}H_{29}$ |
| COMPOUND 8 | $F(CF_2CF_2CF_2O)_nCF_2CF_2$ | $C_{12}H_{25}$ |
| COMPOUND 9 | $F(CF_2CF_2CF_2O)_nCF_2CF_2$ | $C_{10}H_{21}$ |
| COMPOUND 10 | $F(CF_2CF_2CF_2O)_nCF_2CF_2$ | $C_{12}H_{25}$ |
| COMPOUND 11 | $F(CF_2CF_2CF_2O)_nCF_2CF_2$ | $CH_2=CHC_{16}H_{32}$ |
| COMPOUND 12 | $F(CF_2CF_2CF_2O)_nCF_2CF_2$ | $C_6H_5$(PHENYL GROUP) |
| COMPOUND 13 | $CF_3$ | $C_{18}H_{37}$ |
| | $CF_3(OCFCF_2)_m(OCF_2)_\ell$ | |
| COMPOUND 14 | $CF_3$ | $C_{12}H_{25}$ |
| | $CF_3(OCFCF_2)_m(OCF_2)_\ell$ | |

By using, as a lubricant, the compounds 1~14 synthesized in a manner stated above, fourteen (14) kinds of sample tapes were made in accordance with the following procedure.

Preparation of sample tape

Co was deposited on a polyethylene telephthalate film having a thickness of 14 μ by the oblique vacuum deposition method, thus to form a metal magnetic thin film having a thickness of 100 nm.

Then, articles obtained by dissolving compounds 1~14 shown in Table 1 into a mixed solvent of freon and ethanol were coated on the surface of the metal magnetic thin film so that a coating quantity becomes equal to 5 mg/m$^2$.

A magnetic tape thus obtained was cut so that respective segments are 8 mm wide, and those segments were used as sample tapes 1~14.

Evaluation of durability and running characteristic

Respective sample tapes 1~14 prepared in a manner as described above were used to measure friction factor, still durability and shuttle durability under various use conditions of the temperature 25°C and the humidity 60 %, the temperature -5°C, and the temperature 40°C and the humidity 30 %. For reference, measurements were similarly conducted in connection with a blank tape in which no lubricant is used (referred to as a reference example 1) and sample tapes (referred to as comparison example 2~4) in which perfluoropolyether (p, q, ℓ, m and n in Table 2 represent integers 1 or more, respectively) including hydroxyl group at the end shown in Table 2 is used by itself as a lubricant. These results are shown in the following Tables 3 to 5.

In the Tables 3 to 5, the above-mentioned still durability represents a time until an output lowers to 3dB in a pause state, and the shuttle durability represents the shuttle No. until an output when shuttle running of 2 minutes was conducted per each time lowers to 3dB.

Table 2

| | LUBRICANT USED (PERFLUOROPOLYETHER) |
|---|---|
| REFERENCE EXAMPLE 1 | ------------------------ |
| REFERENCE EXAMPLE 2 | $F(CF_2CF_2CF_2O)_nCF_2CF_2CH_2OH$ |
| REFERENCE EXAMPLE 3 | $CF_3$<br>$CF_3(OCFCF_2)_m(OCF_2)_ℓCH_2OH$ |
| REFERENCE EXAMPLE 4 | $HOH_2CCF_2(OC_2F_4)_p(OCF_2)_qOCF_2CH_2OH$ |

Table 3

| SAMPLE TAPE No. | CONDITION | FRICTION FACTOR | STILL DURABILITY (MIN.) | SHUTTLE DURABILITY (NO. OF TIMES) |
|---|---|---|---|---|
| 1 | 25°C, 60%RH<br>40°C, 30%RH<br>-5°C | 0.17<br>0.20<br>0.16 | >120<br>>120<br>>120 | >150<br>>150<br>>150 |
| 2 | 25°C, 60%RH<br>40°C, 30%RH<br>-5°C | 0.18<br>0.21<br>0.17 | >120<br>>120<br>>120 | >150<br>>150<br>>150 |
| 3 | 25°C, 60%RH<br>40°C, 30%RH<br>-5°C | 0.18<br>0.22<br>0.18 | >120<br>>120<br>>120 | >150<br>>150<br>>150 |
| 4 | 25°C, 60%RH<br>40°C, 30%RH<br>-5°C | 0.19<br>0.23<br>0.20 | >120<br>>120<br>>120 | >150<br>>150<br>>150 |
| 5 | 25°C, 60%RH<br>40°C, 30%RH<br>-5°C | 0.17<br>0.19<br>0.17 | >120<br>>120<br>>120 | >150<br>>150<br>>150 |

Table 4

| SAMPLE TAPE No. | CONDITION | FRICTION FACTOR | STILL DURABILITY (MIN.) | SHUTTLE DURABILITY (NO. OF TIMES) |
|---|---|---|---|---|
| 6 | 25°C, 60%RH<br>40°C, 30%RH<br>-5°C | 0.17<br>0.21<br>0.18 | >120<br>>120<br>>120 | >150<br>>150<br>>150 |
| 7 | 25°C, 60%RH<br>40°C, 30%RH<br>-5°C | 0.18<br>0.22<br>0.19 | >120<br>>120<br>>120 | >150<br>>150<br>>150 |
| 8 | 25°C, 60%RH<br>40°C, 30%RH<br>-5°C | 0.18<br>0.22<br>0.19 | >120<br>>120<br>>120 | >150<br>>150<br>>150 |
| 9 | 25°C, 60%RH<br>40°C, 30%RH<br>-5°C | 0.18<br>0.22<br>0.18 | >120<br>>120<br>>120 | >150<br>>150<br>>150 |
| 10 | 25°C, 60%RH<br>40°C, 30%RH<br>-5°C | 0.19<br>0.23<br>0.20 | >120<br>>120<br>>120 | >150<br>>150<br>>150 |
| 11 | 25°C, 60%RH<br>40°C, 30%RH<br>-5°C | 0.20<br>0.23<br>0.20 | >120<br>>120<br>>120 | >150<br>>150<br>>150 |
| 12 | 25°C, 60%RH<br>40°C, 30%RH<br>-5°C | 0.17<br>0.20<br>0.19 | >120<br>>120<br>>120 | >150<br>>150<br>>150 |
| 13 | 25°C, 60%RH<br>40°C, 30%RH<br>-5°C | 0.15<br>0.21<br>0.17 | >120<br>>120<br>>120 | >150<br>>150<br>>150 |
| 14 | 25°C, 60%RH<br>40°C, 30%RH<br>-5°C | 0.16<br>0.20<br>0.18 | >120<br>>120<br>>120 | >150<br>>150<br>>150 |

Table 5

| | CONDITION | FRICTION FACTOR | STILL DURABILITY (MIN.) | SHUTTLE DURABILITY (NO. OF TIMES) |
|---|---|---|---|---|
| REFERENCE EXAMPLE 1 | 25 ° C, 60%RH<br>40 ° C, 30%RH<br>-5 ° C | 0.9<br>---<br>--- | 2<br>----<br>---- | 3<br>---<br>--- |
| REFERENCE EXAMPLE 2 | 25 ° C, 60%RH<br>40 ° C, 30%RH<br>-5 ° C | 0.20<br>0.23<br>0.21 | >120<br>91<br>51 | >150<br>55<br>60 |
| REFERENCE EXAMPLE 3 | 25 ° C, 60%RH<br>40 ° C, 30%RH<br>-5 ° C | 0.22<br>0.25<br>0.23 | 99<br>91<br>43 | 110<br>41<br>30 |
| REFERENCE EXAMPLE 4 | 25 ° C, 60%RH<br>40 ° C, 30%RH<br>-5 ° C | 0.19<br>0.24<br>0.21 | 120<br>116<br>64 | 150<br>50<br>65 |

As shown in the Tables 3~5, as compared to the case where perfluoropolyether including hydroxyl group at the end is used by itself as a lubricant, in the case where such perfluoropolyether is used as ester compound including long chain carboxylic acid, there result extremely less deteriorations in the friction factor, the still durability and the shuttle durability even under various use conditions such as high temperature and high humidity or low temperature and low humidity, etc. As a result, very satisfactory results were obtained.

- Experiment 2 -

In this experiment, ester compound of perfluoropolyether including carboxyl group at the end and long chain alcohol was used as a lubricant to study the durability and the running characteristic under various use conditions in connection with the so-called metal magnetic thin film type magnetic tape in which that lubricant is coated on the surface of the magnetic layer.

Synthesis of ester compound

First, $HOCOCF_2(OC_2F_4)_p(OCF_2)_qOCF_2COOH$ (p and q represent integers 1 or more, respectively) having a molecular weight of 2000 was used as perfluoropolyether including carboxyl group at the end to allow stearyl alcohol having a molecular ratio twice grater than that of this perfluoropolyether to carry out heat-reflux in toluene anhydride by using concentrated sulfuric acid as catalyst. At this time, such heat-reflux was carried out while removing moisture generated.

After reaction is completed, compound obtained after toluene is removed was purified by using silica gel column chromatography.

The infrared absorption spectrum of the purified compound 15 was examined. This result was shown in FIG. 2.

As shown in FIG. 2, stretching vibrations of the C-H bond appear at 2920 $cm^{-1}$ and 2850 $cm^{-1}$. The peak of absorption resulting from stretching vibration of the carbonyl group at 1760 $cm^{-1}$ shifts to 1790 $cm^{-1}$. Further, stretching vibration of the C-F bond appears in a range from 1300 $cm^{-1}$ to 1060 $cm^{-1}$. On the other hand, since absorption resulting from hydroxyl group in the vicinity of 3600 $cm^{-1}$ disappear, this compound 15 can be identified with ester stearate of perfluoropolyether $C_{17}H_{35}OCOCF_2(OC_2F_4)_p(OCF_2)_qOCF_2COOC_{17}H_{35}$ (p and q represent integers 1 or more, respectively).

Then, similarly to the compound 15, various ester compounds (compounds 16~28) of perfluoropolyether including carboxyl group at the both ends and long chain alcohol as shown in Table 6 were synthesized. It is to be noted that p, q, ℓ, m and n in Table 6 represent integers 1 or more, respectively.

Table 6

| | ROOC-$R_f$-COOR | | |
|---|---|---|---|
| | PERFLUOROPOLYETHER CHAIN $R_f$ | ALKYL GROUP R | MOLECULAR WEIGHT |
| COMPOUND 15 | $CF_2(OC_2F_4)_p(OCF_2)_qOCF_2$ | $C_{13}H_{37}$ | 2000 |
| COMPOUND 16 | $CF_2(OC_2F_4)_p(OCF_2)_qOCF_2$ | $C_{16}H_{33}$ | 2000 |
| COMPOUND 17 | $CF_2(OC_2F_4)_p(OCF_2)_qOCF_2$ | $C_{14}H_{29}$ | 2000 |
| COMPOUND 18 | $CF_2(OC_2F_4)_p(OCF_2)_qOCF_2$ | $C_{12}H_{25}$ | 2000 |
| COMPOUND 19 | $CF_2(OC_2F_4)_p(OCF_2)_qOCF_2$ | $C_{18}H_{35}$ | 2000 |
| COMPOUND 20 | $CF_2(OC_2F_4)_p(OCF_2)_qOCF_2$ | iso-$C_{18}H_{35}$ | 2000 |
| COMPOUND 21 | $CF_2(OC_2F_4)_p(OCF_2)_qOCF_2$ | $C_{18}H_{31}$ | 4000 |
| COMPOUND 22 | $F(CF_2CF_2CF_2O)_nCF_2CF_2$ | $C_{18}H_{37}$ | 3500 |
| COMPOUND 23 | $F(CF_2CF_2CF_2O)_nCF_2CF_2$ | $C_6H_5$(PHENYL GROUP) | 3500 |
| COMPOUND 24 | $F(CF_2CF_2CF_2O)_nCF_2CF_2$ | $C_{12}H_{25}$ | 3500 |
| COMPOUND 25 | $F(CF_2CF_2CF_2O)_nCF_2CF_2$ | $C_{24}H_{49}$ | 3500 |
| COMPOUND 26 | $CF_3$<br>$CF_3(OCFCF_2)_m(OCF_2)_\ell$ | $C_{18}H_{37}$ | 650 |
| COMPOUND 27 | $CF_3$<br>$CF_3(OCFCF_2)_m(OCF_2)_\ell$ | $CH_2=CHC_{16}H_{32}$ | 650 |
| COMPOUND 28 | $CF_3$<br>$CF_3(OCFCF_2)_m(OCF_2)_\ell$ | iso-$C_{18}H_{37}$ | 650 |

Preparation of sample tape

Various sample tapes 15~28 were prepared similarly to the above-mentioned experiment 1 except that the compounds 15~28 synthesized in a manner stated above were used as a lubricant.

Evaluation of durability and running characteristic

By using respective sample tapes 15~28 prepared as described above, the friction factor, the still durability and the shuttle durability were respectively measured under various use conditions similarly to the above-mentioned experiment 1. For reference, measurements were similarly conducted also in connection with a blank tape in which no lubricant is used (referred to as a reference example 5) and sample tapes in which perfluoropolyether including carboxyl group at the end shown in the following Table 7 (p, q, $\ell$, m and n in Table 7 represent integers 1 or more, respectively) is used as a lubricant, which are referred to as reference examples 6~8). These results are shown in the following Tables 8 to 10.

Table 7

| | LUBRICANT USED (PERFLUOROPOLYETHER) |
|---|---|
| REFERENCE EXAMPLE 5 | ----------- |
| REFERENCE EXAMPLE 6 | $HOOCCF_2(OC_2F_4)_p(OCF_2)_qOCF_2COOH$ |
| REFERENCE EXAMPLE 7 | $F(CF_2CF_2CF_2O)_nCF_2CF_2COOH$<br>$CF_3$ |
| REFERENCE EXAMPLE 8 | $CF_3(OCFCF_2)_m(OCF_2)_\ell COOH$ |

Table 8

| SAMPLE TAPE NO. | CONDITION | FRICTION FACTOR | STILL DURABILITY (MIN.) | SHUTTLE DURABILITY (NO. OF TIMES) |
|---|---|---|---|---|
| 15 | 25 °C, 60%RH<br>40 °C, 30%RH<br>-5 °C | 0.17<br>0.20<br>0.17 | >120<br>>120<br>>120 | >150<br>>150<br>>150 |
| 16 | 25 °C, 60%RH<br>40 °C, 30%RH<br>-5 °C | 0.17<br>0.21<br>0.18 | >120<br>>120<br>>120 | >150<br>>150<br>>150 |
| 17 | 25 °C, 60%RH<br>40 °C, 30%RH<br>-5 °C | 0.18<br>0.22<br>0.18 | >120<br>>120<br>>120 | >150<br>>150<br>>150 |
| 18 | 25 °C, 60%RH<br>40 °C, 30%RH<br>-5 °C | 0.18<br>0.23<br>0.19 | >120<br>>120<br>>120 | >150<br>>150<br>>150 |
| 19 | 25 °C, 60%RH<br>40 °C, 30%RH<br>-5 °C | 0.18<br>0.22<br>0.18 | >120<br>>120<br>>120 | >150<br>>150<br>>150 |

Table 9

| SAMPLE TAPE NO. | CONDITION | FRICTION FACTOR | STILL DURABILITY (MIN.) | SHUTTLE DURABILITY (NO. OF TIMES) |
|---|---|---|---|---|
| 20 | 25°C, 60%RH<br>40°C, 30%RH<br>-5°C | 0.19<br>0.23<br>0.19 | >120<br>>120<br>>120 | >150<br>>150<br>>150 |
| 21 | 25°C, 60%RH<br>40°C, 30%RH<br>-5°C | 0.20<br>0.23<br>0.21 | >120<br>>120<br>>120 | >150<br>>150<br>>150 |
| 22 | 25°C, 60%RH<br>40°C, 30%RH<br>-5°C | 0.18<br>0.22<br>0.19 | >120<br>>120<br>>120 | >150<br>>150<br>>150 |
| 23 | 25°C, 60%RH<br>40°C, 30%RH<br>-5°C | 0.21<br>0.22<br>0.21 | >120<br>>120<br>>120 | >150<br>>150<br>>150 |
| 24 | 25°C, 60%RH<br>40°C, 30%RH<br>-5°C | 0.19<br>0.22<br>0.20 | >120<br>>120<br>>120 | >150<br>>150<br>>150 |
| 25 | 25°C, 60%RH<br>40°C, 30%RH<br>-5°C | 0.17<br>0.19<br>0.17 | >120<br>>120<br>>120 | >150<br>>150<br>>150 |
| 26 | 25°C, 60%RH<br>40°C, 30%RH<br>-5°C | 0.18<br>0.20<br>0.18 | >120<br>>120<br>>120 | >150<br>>150<br>>150 |
| 27 | 25°C, 60%RH<br>40°C, 30%RH<br>-5°C | 0.18<br>0.21<br>0.19 | >120<br>>120<br>>120 | >150<br>>150<br>>150 |
| 28 | 25°C, 60%RH<br>40°C, 30%RH<br>-5°C | 0.20<br>0.23<br>0.20 | >120<br>>120<br>>120 | >150<br>>150<br>>150 |

Table 10

| | CONDITION | FRICTION FACTOR | STILL DURABILITY (MIN.) | SHUTTLE DURABILITY (NO. OF TIMES) |
|---|---|---|---|---|
| REFERENCE EXAMPLE 5 | 25 °C, 60%RH<br>40 °C, 30%RH<br>-5 °C | 0.9<br>----<br>---- | 2<br>----<br>---- | 3<br>---<br>--- |
| REFERENCE EXAMPLE 6 | 25 °C, 60%RH<br>40 °C, 30%RH<br>-5 °C | 0.24<br>0.27<br>0.25 | >120<br>91<br>51 | >150<br>55<br>60 |
| REFERENCE EXAMPLE 7 | 25 °C, 60%RH<br>40 °C, 30%RH<br>-5 °C | 0.22<br>0.23<br>0.22 | >120<br>76<br>29 | 120<br>46<br>40 |
| REFERENCE EXAMPLE 8 | 25 °C, 60%RH<br>40 °C, 30%RH<br>-5 °C | 0.24<br>0.26<br>0.25 | 95<br>67<br>20 | 120<br>35<br>30 |

As compared to the case where perfluoropolyether including carboxyl group at the end is used by itself as a lubricant as shown in the Tables 8~10, in the case where ester compound of perfluoropolyether and long chain alcohol is used as a lubricant, there result extremely less degradation in the friction factor, the still durability and the shuttle durability even various use conditions such as high temperature and high humidity or low temperature and low humidity, etc. Thus, very satisfactory result was obtained.

- Experiment 3 -

In this experiment, ester compound of perfluoropolyether including hydroxyl group at the end and carboxylic acid including alkyl fluoride group was used as a lubricant to study the durability and the running characteristic under various use conditions in connection with the so-called metal magnetic thin film type magnetic tape in which this lubricant is coated on the surface of a magnetic layer.

Synthesis of ester compound

First, perfluoropolyether including hydroxylic group at the end and corresponding acid chloride derived from carboxylic acid including alkyl fluoride group having a molar weight equal to that of hydroxylic group included in the perfluoropolyether were mixed to synthesize various ester compounds (compounds 29~38) as shown in the following Table 11. In Table 11, $\ell$, m and n represent positive integers, respectively.

Table 11

| | KIND OF PERFLUORO-POLYETHER | PERFLUOROPOLYETHER CHAIN $R_f$ | ALKYL FLUORIDE GROUP R |
|---|---|---|---|
| COMPOUND 29 | MONO-FUNCTIONAL | $(CF_2CF(CF_3)O)_n(CF_2O)_mCF_2$ | $C_8F_{17}(CH_2)_9$ |
| COMPOUND 30 | MONO-FUNCTIONAL | $(CF_2CF(CF_3)O)_n(CF_2O)_mCF_2$ | $C_{12}F_{25}(CH_2)_5$ |
| COMPOUND 31 | MONO-FUNCTIONAL | $(CF_2CF(CF_3)O)_n(CF_2O)_mCF_2$ | $C_8F_{17}(CH_2)_{17}$ |
| COMPOUND 32 | MULTI-FUNCTIONAL | $(CF_2O)_n(CF_2CF_2O)_m(CF_2O)_\ell CF_2$ | $C_8F_{17}(CH_2)_9$ |
| COMPOUND 33 | MULTI-FUNCTIONAL | $(CF_2O)_n(CF_2CF_2O)_m(CF_2O)_\ell CF_2$ | $C_{12}F_{25}(CH_2)_5$ |
| COMPOUND 34 | MULTI-FUNCTIONAL | $(CF_2O)_n(CF_2CF_2O)_m(CF_2O)_\ell CF_2$ | $C_8F_{17}(CH_2)_{17}$ |
| COMPOUND 35 | MONO-FUNCTIONAL | $(CF_2CF(CF_3)O)CF_2$ | $C_8F_{17}(CH_2)_9$ |
| COMPOUND 36 | MONO-FUNCTIONAL | $(CF_2CF(CF_3)O)CF_2$ | $C_{12}F_{25}(CH_2)_5$ |
| COMPOUND 37 | MONO-FUNCTIONAL | $(CF_2CF_2CF_2O)_nCF_2CF_2$ | $C_8F_{17}(CH_2)_9$ |
| COMPOUND 38 | MONO-FUNCTIONAL | $(CF_2CF_2CF_2O)_nCF_2CF_2$ | $C_{12}F_{25}(CH_2)_5$ |

Preparation of sample tape

Various sample tapes 29~38 were prepared similarly to the above-mentioned experiment 1 except that compounds 29~38 synthesized in a manner as stated above are used as a lubricant.

Evaluation of durability and running characteristic

By using respective sample tapes 29~38 prepared as described above, the friction factor, the still durability and the shuttle durability were respectively measured under various use conditions similarly to the above-mentioned example 1. For reference, measurement is similarly carried out also in connection with a blank tape in which no lubricant is used (referred to as a comparison example 9). This result is shown the following Tables 12A~12C.

Table 12

| SAMPLE TAPE NO. | CONDITION | FRICTION FACTOR | STILL DURABILITY (MIN.) | SHUTTLE DURABILITY (NO. OF TIMES) |
|---|---|---|---|---|
| 29 | 25°C,60%RH<br>40°C,30%RH<br>-5°C | 0.22<br>0.25<br>0.22 | >120<br>> 60<br>> 60 | >150<br>>150<br>>150 |
| 30 | 25°C,60%RH<br>40°C,30%RH<br>-5°C | 0.20<br>0.22<br>0.22 | >120<br>> 60<br>> 60 | >150<br>>150<br>>150 |
| 31 | 25°C,60%RH<br>40°C,30%RH<br>-5°C | 0.20<br>0.23<br>0.22 | >120<br>> 60<br>> 60 | >150<br>>150<br>>150 |
| 32 | 25°C,60%RH<br>40°C,30%RH<br>-5°C | 0.23<br>0.25<br>0.24 | >120<br>> 60<br>> 60 | >150<br>>150<br>>150 |
| 33 | 25°C,60%RH<br>40°C,30%RH<br>-5°C | 0.22<br>0.25<br>0.25 | >120<br>> 60<br>> 60 | >150<br>>150<br>>150 |
| 34 | 25°C,60%RH<br>40°C,30%RH<br>-5°C | 0.22<br>0.22<br>0.22 | >120<br>> 60<br>> 60 | >150<br>>150<br>>150 |
| 35 | 25°C,60%RH<br>40°C,30%RH<br>-5°C | 0.21<br>0.23<br>0.23 | >120<br>> 60<br>> 60 | >150<br>>150<br>>150 |
| 36 | 25°C,60%RH<br>40°C,30%RH<br>-5°C | 0.20<br>0.22<br>0.22 | >120<br>> 60<br>> 60 | >150<br>>150<br>>150 |
| 37 | 25°C,60%RH<br>40°C,30%RH<br>-5°C | 0.22<br>0.24<br>0.22 | >120<br>> 60<br>> 60 | >150<br>>150<br>>150 |
| 38 | 25°C,60%RH<br>40°C,30%RH<br>-5°C | 0.20<br>0.22<br>0.21 | >120<br>> 60<br>> 60 | >150<br>>150<br>>150 |
| REFERENCE EXAMPLE 9 | 25°C,60%RH<br>40°C,30%RH<br>-5°C | 0.9<br>>0.9<br>>0.9 | 2<br>1<br><1 | 3<br>2<br><2 |

As shown in Table 12, ester compound of perfluoropolyether including hydroxyl group at the end and carboxylic acid including alkyl fluoride group was used as a lubricant. Thus, the friction factor, the still durability and the shuttle durability, etc. showed vary satisfactory result without being degraded even under various conditions.

- Experiment 4 -

In this experiment, ester compound of perfluoropolyether including carboxyl group at the end and alcohol including alkyl fluoride group was used as a lubricant to study durability and running characteristic under various use conditions in connection with the so-called metal magnetic thin film type magnetic tape in

which the above-mentioned lubricant is coated on the surface of the magnetic layer.

Synthesis of ester compound

First, corresponding acid chloride derived from perfluoropolyether including carboxyl group at the end and alcohol including alkyl fluoride group having a molecular weight equal to that of carboxylic group included in the perfluoropolyether were mixed to synthesize various ester compounds (compounds 39~48) as shown in the following Table 13. In Fig. 13, $\ell$, m and n represent positive integers, respectively.

Table 13

| | KIND OF PERFLUORO-POLYETHER | PERFLUORO-POLYETHER CHAIN $R_f$ | ALKYL FLUORIDE GROUP R |
|---|---|---|---|
| COMPOUND 39 | MONO-FUNCTIONAL | $CF_3$<br>$(CF_2CFO)_n(CF_2O)_mCF_2$ | $C_8F_{17}(CH_2)_9$ |
| COMPOUND 40 | MONO-FUNCTIONAL | $CF_3$<br>$(CF_2CFO)_n(CF_2O)_mCF_2$ | $C_{12}F_{25}(CH_2)_5$ |
| COMPOUND 41 | MONO-FUNCTIONAL | $CF_3$<br>$(CF_2CFO)_n(CF_2O)_mCF_2$ | $C_8F_{17}(CH_2)_{17}$ |
| COMPOUND 42 | MULTI-FUNCTIONAL | $(CF_2O)_n(CF_2CF_2O)_m(CF_2O)_\ell CF_2$ | $C_8F_{17}(CH_2)_9$ |
| COMPOUND 43 | MULTI-FUNCTIONAL | $(CF_2O)_n(CF_2CF_2O)_m(CF_2O)_\ell CF_2$ | $C_{12}F_{25}(CH_2)_5$ |
| COMPOUND 44 | MULTI-FUNCTIONAL | $(CF_2O)_n(CF_2CF_2O)_m(CF_2O)_\ell CF_2$ | $C_8F_{17}(CH_2)_{17}$ |
| COMPOUND 45 | MONO-FUNCTIONAL | $CF_3$<br>$(CF_2CFO)CF_2$ | $C_8F_{17}(CH_2)_9$ |
| COMPOUND 46 | MONO-FUNCTIONAL | $CF_3$<br>$(CF_2CFO)CF_2$ | $C_{12}F_{25}(CH_2)_5$ |
| COMPOUND 47 | MONO-FUNCTIONAL | $(CF_2CF_2CF_2O)_nCF_2CF_2$ | $C_8F_{17}(CH_2)_9$ |
| COMPOUND 48 | MONO-FUNCTIONAL | $(CF_2CF_2CF_2O)_nCF_2CF_2$ | $C_{12}F_{25}(CH_2)_5$ |

Preparation of sample tape

Various sample tapes 39~48 were prepared similarly to the above-mentioned experiment 1 except that the compounds 39~48 synthesized in a manner stated above were used as a lubricant.

Evaluation of durability and running characteristic

By using respective sample tapes 39~48 prepared as described above, the friction factor, the still durability and the shuttle durability were respectively measured under various use conditions similarly to the above-mentioned experiment 1. For reference, measurement was similarly conducted also in connection with a blank tape in which no lubricant is used (referred to as a comparison example 10). This result is shown in the following table 14.

Table 14

| SAMPLE TAPE NO. | CONDITION | FRICTION FACTOR | STILL DURABILITY (MIN.) | SHUTTLE DURABILITY (NO. OF TIMES) |
|---|---|---|---|---|
| 39 | 25°C,60%RH<br>40°C,30%RH<br>-5°C | 0.19<br>0.22<br>0.22 | >120<br>> 60<br>> 60 | >150<br>>150<br>>150 |
| 40 | 25°C,60%RH<br>40°C,30%RH<br>-5°C | 0.22<br>0.24<br>0.23 | >120<br>> 60<br>> 60 | >150<br>>150<br>>150 |
| 41 | 25°C,60%RH<br>40°C,30%RH<br>-5°C | 0.20<br>0.22<br>0.24 | >120<br>> 60<br>> 60 | >150<br>>150<br>>150 |
| 42 | 25°C,60%RH<br>40°C,30%RH<br>-5°C | 0.22<br>0.24<br>0.24 | >120<br>> 60<br>> 60 | >150<br>>150<br>>150 |
| 43 | 25°C,60%RH<br>40°C,30%RH<br>-5°C | 0.21<br>0.25<br>0.25 | >120<br>> 60<br>> 60 | >150<br>>150<br>>150 |
| 44 | 25°C,60%RH<br>40°C,30%RH<br>-5°C | 0.20<br>0.22<br>0.23 | >120<br>> 60<br>> 60 | >150<br>>150<br>>150 |
| 45 | 25°C,60%RH<br>40°C,30%RH<br>-5°C | 0.21<br>0.21<br>0.21 | >120<br>> 60<br>> 60 | >150<br>>150<br>>150 |
| 46 | 25°C,60%RH<br>40°C,30%RH<br>-5°C | 0.21<br>0.23<br>0.22 | >120<br>> 60<br>> 60 | >150<br>>150<br>>150 |
| 47 | 25°C,60%RH<br>40°C,30%RH<br>-5°C | 0.22<br>0.22<br>0.24 | >120<br>> 60<br>> 60 | >150<br>>150<br>>150 |
| 48 | 25°C,60%RH<br>40°C,30%RH<br>-5°C | 0.21<br>0.22<br>0.21 | >120<br>> 60<br>> 60 | >150<br>>150<br>>150 |
| REFERENCE EXAMPLE 10 | 25°C,60%RH<br>40°C,30%RH<br>-5°C | 0.9<br>>0.9<br>>0.9 | 2<br>1<br><1 | 3<br>2<br><2 |

As shown in Table 14, ester compound of perfluoropolyether including carboxyl group at the end and alcohol including alkyl fluoride group was used as a lubricant. Thus, the friction factor, the still durability, and the shuttle durability, etc. showed very satisfactory result without being deteriorated even under various conditions.

**Claims**

**1.** A lubricant consisting of ester compound of perfluoropolyether including hydroxyl group at the end and long chain carboxylic acid, which is indicated by a general expression of

$R_f$-$CH_2$OCOR

(In the above formula, $R_f$ represents perfluoropolyether chain. R represents alkyl group.), or

RCOOCH$_2$-$R_f$-$CH_2$OCOR

(In the above formula, $R_f$ represents perfluoropolyether chain. R represents alkyl group.)

**2.** A lubricant consisting of ester compound of perfluoropolyether including carboxyl group at the end and long chain alcohol, which is indicated by a general expression of

$R_f$-COOR

(In the above formula, $R_f$ represents perfluoropolyether chain. R represents alkyl group), or

ROCO-$R_f$-COOR

(In the above formula, $R_f$ represents perfluoropolyether chain. R represents alkyl group.)

**3.** A lubricant consisting of ester compound of perfluoropolyether including hydroxyl group at the end and carboxylic acid including alkyl fluoride group indicated by RCOOH (In this formula, R represents alkyl fluoride group having the number of carbons of 7~30), which is indicated by a general expression of

$R_f$-$CH_2$OCOR

(In the above formula, $R_f$ represents perfluoropolyether. R represents alkyl fluoride group.), or

RCOOCH$_2$-$R_f$-$CH_2$OCOR

(In the above formula, $R_f$ represents perfluoropolyether. R represents alkyl fluoride group.)

**4.** A lubricant consisting of ester compound of perfluoropolyether including carboxyl group at the end and alcohol including alkyl fluoride group indicated by ROH (In the formula, R represents alkyl fluoride group having the number of carbons of 7~30), which is indicated by a general expression of

$R_f$-COOR

(In the formula, $R_f$ represents perfluoropolyether chain. R represents alkyl fluoride group.), or

ROCO-$R_f$-COOR

(In the formula, $R_f$ represents perfluoropolyether chain. R represents alkyl fluoride group.)

**5.** A magnetic recording medium including at least a magnetic layer on a non-magnetic support, wherein said magnetic recording medium includes, at the surface of said magnetic layer, a lubricant consisting of ester compound of perfluoropolyether including hydroxyl group at the end and long chain carboxylic acid, which is indicated by a general expression of

$R_f$-$CH_2OCOR$

(In the formula, $R_f$ represents perfluoropolyether chain. R represents alkyl group.), or

$RCOOCH_2$-$R_f$-$CH_2OCOR$

(In the formula, $R_f$ represents perfluoropolyether chain. R represents alkyl group.)

**6.** A magnetic recording medium including at least a magnetic layer on a non-magnetic support, wherein said magnetic recording medium includes, at the surface of said magnetic layer, a lubricant consisting of ester compound of perfluoropolyether including carboxyl group at the end and long chain alcohol, which is indicated by a general expression of

$R_f$-COOR

(In the formula, $R_f$ represents perfluoropolyether chain. R represents alkyl group.), or

ROCO-$R_f$-COOR

(In the formula, $R_f$ represents perfluoropolyether chain. R represents alkyl group.)

**7.** A magnetic recording medium including at least a magnetic layer on a non-magnetic support, wherein said magnetic recording medium includes, at the surface of said magnetic layer, a lubricant consisting of ester compound of perfluoropolyether including hydroxyl group at the end and carboxylic acid including alkyl fluoride group indicated by RCOOH (In the formula, R represents alkyl fluoride group having the number of carbons of 7~30), which is indicated by an expression of

$R_f$-$CH_2OCOR$

(In the formula, $R_f$ represents perfluoropolyether chain. R represents alkyl fluoride group.), or

$RCOOCH_2$-Rf-$CH_2OCOR$

(In the formula, $R_f$ represents perfluoropolyether chain. R represents alkyl fluoride group.)

**8.** A magnetic recording medium including at least a magnetic layer on a non-magnetic support, wherein said magnetic recording medium includes, at the surface of said magnetic layer, a lubricant consisting of compound of perfluoropolyether including carboxyl group at the end and alcohol including alkyl fluoride group indicated by ROH (In the formula, R represents alkyl fluoride group having the number of carbons of 7~30.), which is indicated by a general expression of

$R_f$-COOR

(In the formula, $R_f$ represents perfluoropolyether. R represents alkyl fluoride group.), or

ROCO-$R_f$-COOR

(In the formula, $R_f$ represents perfluoropolyether. R represents alkyl fluoride group.)

**9.** A recording medium as set forth in claim 5, wherein a lubricant is coated on the surface of the magnetic layer at a ratio of 0.5~100 $mg/m^2$.

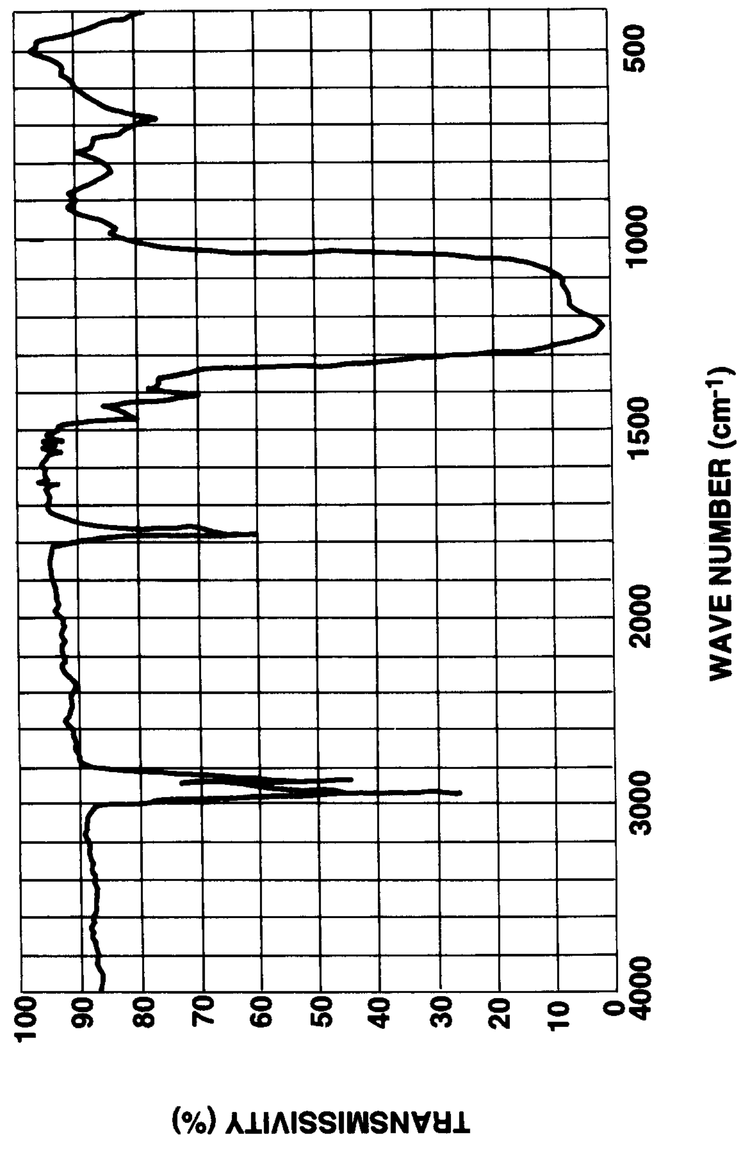
TRANSMISSIVITY (%)
100
90
80
70
60
50
40
30
20
10
0
4000
3000
2000
1500
1000
500
WAVE NUMBER ($cm^{-1}$)

FIG.1

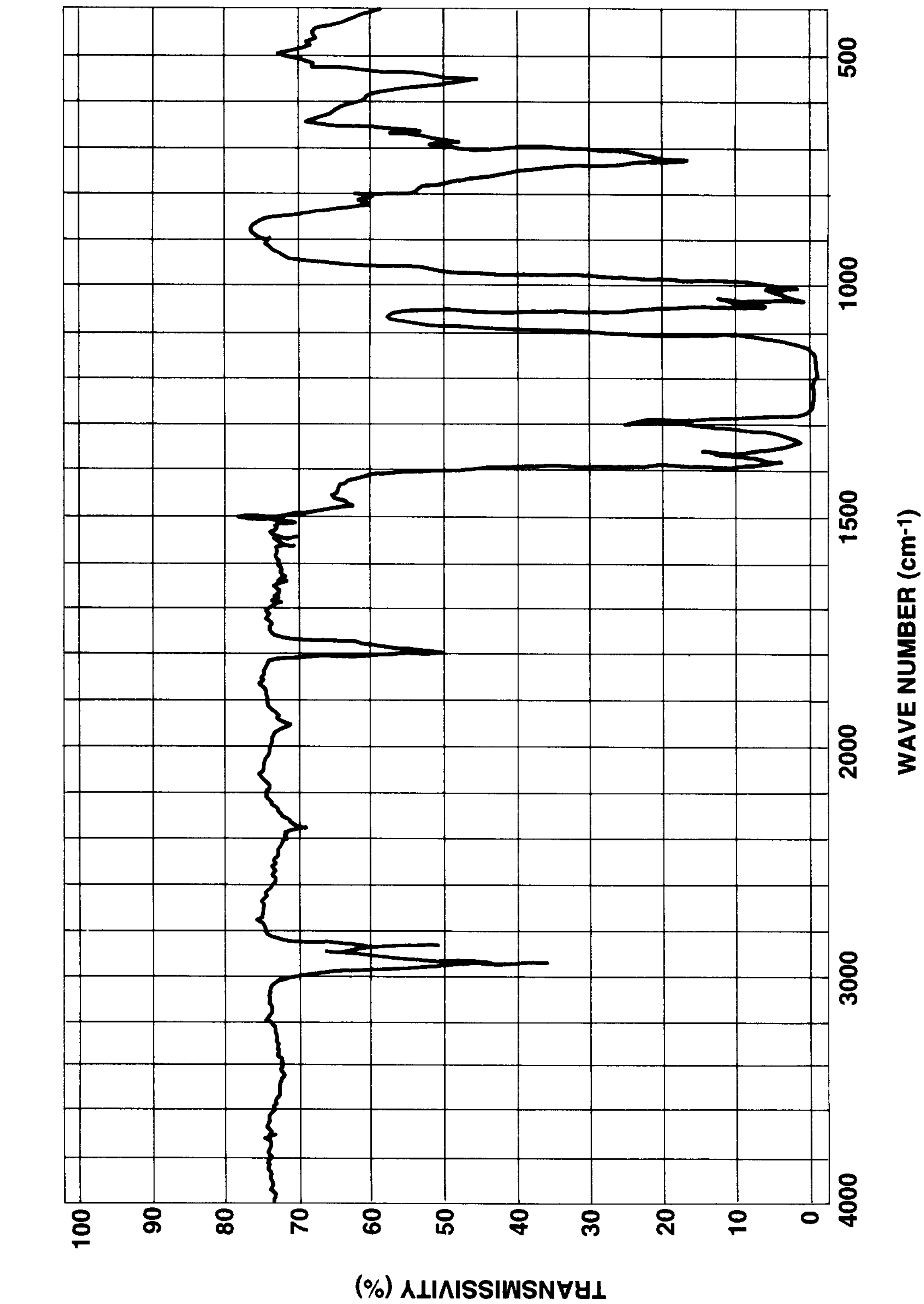
TRANSMISSIVITY (%)
100
90
80
70
60
50
40
30
20
10
0
WAVE NUMBER (cm-1)
4000
3000
2000
1500
1000
500

FIG.2

## INTERNATIONAL SEARCH REPORT

International application No.
PCT/JP93/00352

**A. CLASSIFICATION OF SUBJECT MATTER**

Int. $Cl^5$ C10M107/38, C10N40:18, G11B5/71

According to International Patent Classification (IPC) or to both national classification and IPC

**B. FIELDS SEARCHED**

Minimum documentation searched (classification system followed by classification symbols)

Int. $Cl^5$ C10M107/38, C10N40:18, G11B5/71

Documentation searched other than minimum documentation to the extent that such documents are included in the fields searched

Electronic data base consulted during the international search (name of data base and, where practicable, search terms used)

CAS ONLINE

**C. DOCUMENTS CONSIDERED TO BE RELEVANT**

| Category* | Citation of document, with indication, where appropriate, of the relevant passages | Relevant to claim No. |
|---|---|---|
| X | JP, A, 62-270019 (Ausimont S.p.A.), November 24, 1987 (24. 11. 87), & EP, A2, 239123 | 2, 6 |
| A | JP, A, 62-226421 (Sony Corp.), October 5, 1987 (05. 10. 87), (Family: none) | 2, 6, 9 |
| A | JP, A, 62-226422 (Sony Corp.), October 5, 1987 (05. 10. 87), (Family: none) | 1, 5, 9 |
| A | JP, A, 62-161744 (Sony Corp.), July 17, 1987 (17. 07. 87), (Family: none) | 3, 7 |
| A | JP, A, 1-302529 (Hitachi Maxell, Ltd.), December 6, 1989 (06. 12. 89), & EP, A2, 320241 | 2, 4, 6, 8 |
| X | JP, A, 3-7798 (Asahi Chemical Industry | 2 |

[X] Further documents are listed in the continuation of Box C. [ ] See patent family annex.

* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| June 3, 1993 (03. 06. 93) | June 22, 1993 (22. 06. 93) |
| Name and mailing address of the ISA/ Japanese Patent Office | Authorized officer |
| Facsimile No. | Telephone No. |

INTERNATIONAL SEARCH REPORT

International application No.
PCT/JP93/00352

C (Continuation). DOCUMENTS CONSIDERED TO BE RELEVANT

| Category* | Citation of document, with indication, where appropriate, of the relevant passages | Relevant to claim No. |
|---|---|---|
| | Co., Ltd.),<br>January 14, 1991 (14. 01. 91),<br>& WO, A1, 90/15122 & EP, A1, 432273 | |
| A | JP, A, 1-211216 (Seiko Epson Corp.),<br>August 24, 1989 (24. 08. 89),<br>(Family: none) | 1, 5 |
| Y | JP, A, 1-268664 (Daikin Industries, Ltd.),<br>October 26, 1989 (26. 10. 89),<br>& US, A, 5004554 | 4, 8 |
| A | JP, A, 56-124127 (Minnesota Mining & Mfg., Co.),<br>September 29, 1981 (29. 09. 81),<br>& US, A, 4267238 & US, A, 4268556<br>& DE, A1, 300583 & FR, A1, 2458867<br>& GB, A, 2042369 | 2, 6, 9 |